# EUROPEAN PATENT SPECIFICATION

(11) **EP 0 565 528 B1**
(45) Date of publication and mention of the grant of the patent: **04.11.1998**
(21) Application number: 91919002.5
(22) Date of filing: 02.08.1991
(51) Int. Cl.: H04K 1/00, H04M 11/00

(54) **SECURE OVER-THE-AIR REGISTRATION OF CORDLESS TELEPHONES**
SICHERE REGISTRIERUNG VON SCHNURLOSEN TELEFONEN ÜBER FUNK
ENREGISTREMENT EN EMISSION D'UN TELEPHONE SANS FIL

(30) Priority: 31.12.1990 US 635405
(43) Date of publication of application: 20.10.1993
(73) Proprietor: MOTOROLA INC., Fort Lauderdale, FL 33322 (US)
(72) Inventor: D'AMICO, Thomas, V., Boca Raton, FL 33431 (US); SHARP, Ronald, E., Plantation, FL 33322 (US)
(74) Representative: Dunlop, Hugh Christopher
(86) International application number: US9105495
(87) International publication number: WO9212584

(56) References cited:
- EP-A- 0 301 573
- EP-A- 0 459 065
- US-A- 4 560 832
- US-A- 4 574 163
- US-A- 4 654 481
- US-A- 4 811 377

## Description

### Technical Field

This invention relates generally to public cordless telephone systems.

### Background of the Invention

Cordless telephone communication systems generally comprise a plurality of public base stations (also called telepoints) that may be used by any subscribers within range. In the future such public base stations may become as common as public telephones are today. When in range, a subscriber will be able to access the public switched telephone network (PSTN) and place a call. However, registration of a cordless handset into a cordless telephone system presents some problems. There is an expected delay from the time that a customer buys a cordless handset (also known as a portable communication unit, or simply a portable unit) until the customer receives access to the cordless telephone system from the network operator. This delay is generally used for checking the subscriber's credentials such as available credit or other qualifying information. Since the portables store all registration data, there is a need to load this data at a convenient time and location after the credit check is completed. In cellular systems on-line validation is used where a portable may be activated instantly at a central data base.

The generation, delivery, and loading of the registration data is an arduous task. For example, CT-2 requires the manual entry of up to 67 characters (including all check digits). Reduction or elimination of this manual entry is highly desirable.

The prior art includes European patent EP-A-0459 065 published on 4 December 1991, after the priority date of the present invention. This reference shows a communication system including a network controller which has a database for storing portable identification numbers and a base station. A subscriber communicates to the network controller subscriber qualifying information, the portable identification number and a key code. A portable unit for use in the communication system has a means for sending a registration request to the base. The request includes a link identification number for over-the-air registration and the portable identification number. The portable unit further includes a means for receiving registration information from the network controller and a means for decrypting an encrypted subscriber identification number. The prior art further includes European patent EP-A-0 301 573 which discloses registering a new cordless telephone to an existing cordless telephone system by transmitting the product identification number of the new cordless telephone from an access unit of the system to the cordless telephone and verifying correct reception. In response to the verification, the system and telephone identification numbers of the new cordless telephone are transmitted from the system to the new cordless telephone.

### Summary of the Invention

Briefly, according to the invention, a method for registration of a portable unit may be utilized in a communication system that comprises a network controller, having a data base for storing portable identification numbers, a base station, and a portable unit, wherein a subscriber communicates to the network controller a first information set which comprises subscriber qualifying information, the portable identification number, and a key code that has been entered into the potable, and wherein the subscriber has entered a link identification number for over-the-air registration into a memory within the portable unit. The registration method comprises the following steps. The portable unit sends the base station a request for registration. The request for registration comprises the link identification number for over-the-air registration and the portable identification number. The base station receives the request for registration from the portable unit, and sends to the network controller a notice of the request for registration and the portable identification number. The network controller receives the notice of the request for registration from the base station, and determines whether the portable identification number is in the network controller data base, and whether the subscriber has been approved for registration. The network controller then sends to the portable unit, through the base station, a registration information signal if the network controller determines that the portable identification number for over-the-air registration is in the network controller data base, and that the subscriber has been approved for registration. The registration information signal comprises an encrypted subscriber identification number that has been encrypted with the key code, and an unencrypted link identification number for base station access.

The invention includes a method for registration according to claim 1, and a method for re-registration according to claim 5.

### Brief Description of the Drawings

Figure 1 shows a communication system in which the invention may be advantageously utilized.

Figure 2 shows a portable unit that may be adapted for use in accordance with the invention.

Figure 3 shows a base station that may be adapted for use in accordance with the invention.

Figures 4a and 4b, show a simplified block diagram of a portable unit registration process in accordance with the invention.

Figures 5a and 5b show a method for re-registration of a subscriber unit.

### Detailed Description of the Preferred Embodiment

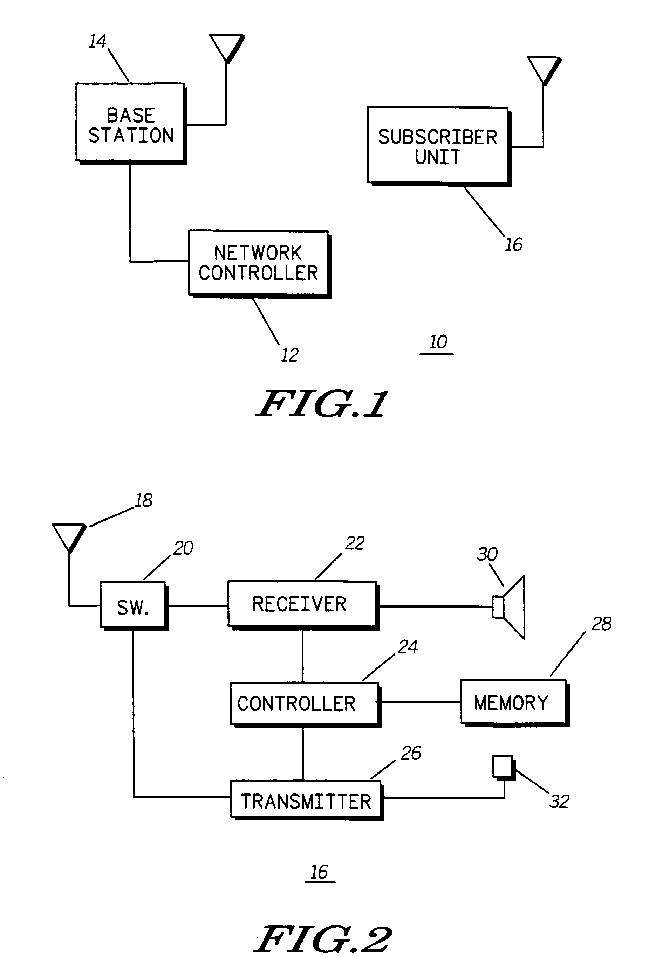

Referring to Figure 1, a communication system 10 in which the invention may be advantageously utilized is shown. The system 10 comprises a network controller 12, a base station 14, and a portable unit 16.

Referring to Figure 2, there is shown a portable unit 16 that may be adapted for use in accordance with the invention. The portable unit 16 comprises an antenna 18, a transmit /receive switch 20, a radio-frequency receiver 22, a radio-frequency transmitter 26, a controller 24 (e.g., a conventional microcomputer), a memory 28 (e.g., a read only memory and/or a random access memory), a speaker 30, and a microphone 32 all coupled as shown in the Figure 1. The portable unit 16 may be adapted to operate in accordance with the invention by programming the controller 24 to use the portable unit registration and re-registration processes of the invention.

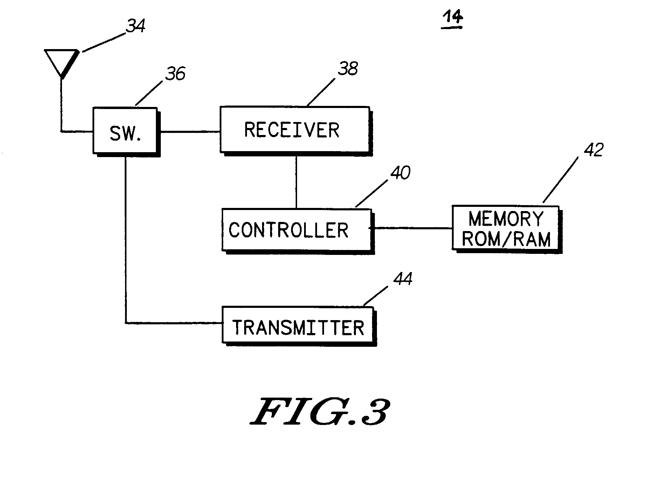

Referring to Figure 3, there is shown a base station 14 that may be adapted for use in accordance with the invention. The base station 14 comprises an antenna 34, a transmit /receive switch 36, a radio-frequency receiver 38, a radio-frequency transmitter 44, a controller 40 (e.g., a conventional microcomputer), a memory 42 (e.g., a read only memory and/or a random access memory), all coupled as shown in the Figure 3.

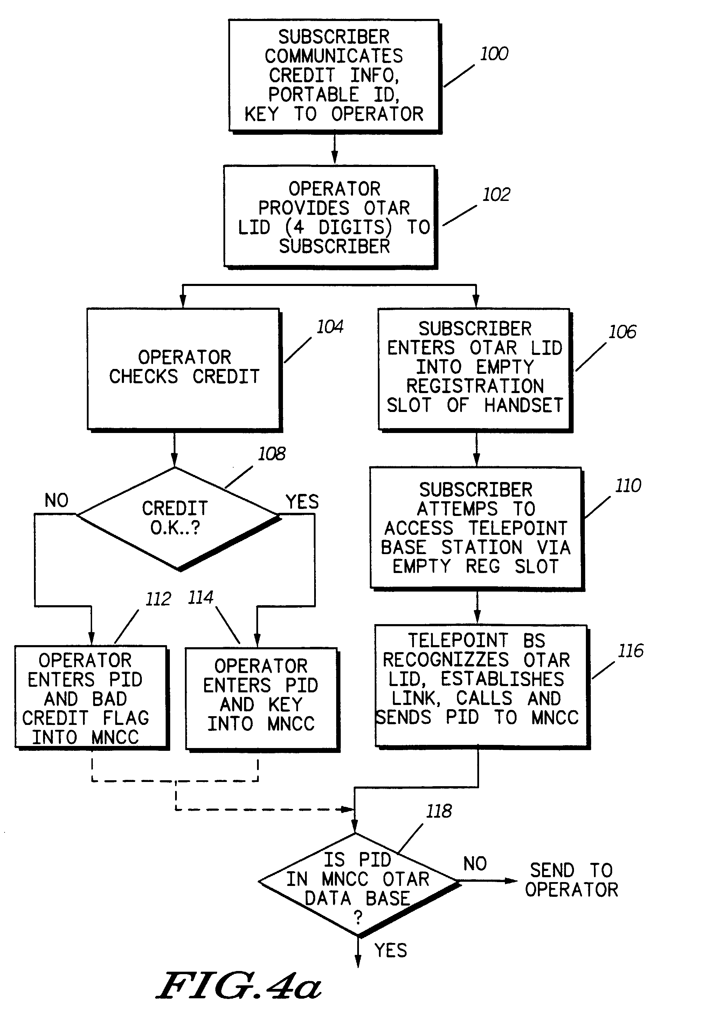

Referring to Figure 4a, there is shown a simplified block diagram of a portable unit registration process in accordance with the invention. In a preferred embodiment, a key code is loaded into the portable unit during manufacture, and printed in a sealed envelope. The subscriber then only needs to read the key code to the network operator (possibly during a wireless telephone conversation). Manual entry of a key code may be used as a back-up method in case that (1) the subscriber loses the envelope, or (2) the registration slot has previously been used and the network operator changed the key code. The registration process may begin at the time that a person buys a portable unit 16, and the portable unit dealer (or the customer) loads a key code in the portable unit 16. The secret key code may also be generated by a network operator along with a check character to maximize correct entry of the key code. Alternately, the portable unit dealer could generate the key code, provided that a high degree of randomness is assured, and a check digit or other known means is used to minimize entry errors. A network operator receives all customer credential data (in this example these data relate to the subscriber's credit), and the secret key code (if the key code is dealer-generated).

According to step 100, a subscriber, seeking registration in the communication system, communicates his or her qualifying credentials (e.g., credit information) to the network controller. The communicated information may comprise a portable unit serial number, and a secret key code that is used to encrypt and decrypt secure registration data. In step 102, the network operator provides a link identification number to the subscriber. The link identification number comprises four digits and is used for specific telepoint access. In step 104, the network operator (and the network controller) determine whether the credit information provided by the subscriber complies with a set of criteria used for qualifying the subscriber (in this example: whether the subscriber's credit is adequate). In decision 108, if the credit information of the subscriber complies with the qualifying criteria, the network operator enters a portable identification number, and a 64 bit secret key code into the network control center (which is preferably within the network controller). If the credit information relating to the subscriber does not comply with the qualifying criteria of step 104, the operator enters the portable identification number, and an invalid flag into the network control center.

According to step 110, the subscriber attempts to access a telepoint base station via a registration slot having the link identification number. Then according to step 116, the telepoint base station recognizes the over-the-air link identification number, establishes a communication link, and calls and sends the portable identification number to the network control center. In decision 118, the network controller determines whether the portable identification number is in the network controller center in the air database. If it is not, then the portable identification number is sent to the operator and the network controller.

Referring to Figure 4b, if the network controller determines that the portable identification number is in the database, then a further decision 120 is made relating to whether there is a valid/invalid flag set. If there is a invalid flag set, that information is sent to the operator, and the network controller. If a valid flag is found, the network controller sends the link identification number, the nine-bit operator's identification code number, the three-bit telepoint class of service number, and the 20 bit digit telepoint registration data field to the portable unit in unencrypted form. In addition, the network controller sends the portable an encrypted subscriber identification number that has been encrypted with the key code for that portable unit. Next, in step 124 the portable unit decrypts the subscriber identification number, and stores all registration data in its memory. In step 126, the base station sends an authentication request to the portable unit. Once the portable unit receives the authentication request and responds thereto, the base station makes a decision 130 on whether the received authentication response signal is valid. If the authentication response signal is valid the initial registration is completed in step 134 and call-processing may proceed, as required. On the other hand, if the authentication response signal is not valid, then a decision 128 must be made on whether a maximum number of over-the-air registration attempts has been made. If the maximum number of over-the-air attempts is reached, then step 132 requires that the operator in the network controller be so notified. If the maximum number of over-the-air attempts has not been reached, then the process returns to step 122.

A registration method similar to the above-discussed method allows for immediate registration. The steps are as follows. The subscriber locates a base station and attempts to register. The base station recognizes the the registration attempt, and contacts the network controller which checks its data base for a valid flag. If the valid flag is not found, the subscriber is connected to a network operator "help desk". Alternatively, the subscriber could manually place a free call to the network operator "help desk". No registration would be required for this kind of call.

Upon receipt of a credit card charge number or other credit approval, the network operator "help desk" provides the subscriber with a key code and a check character to enter with a keypad. Simultaneously or immediately thereafter, the network controller receives the portable identification number from the base station and downloads the key code and all registration data to that base station. The subscriber may then register over the air in a secure data mode as in the above-described method.

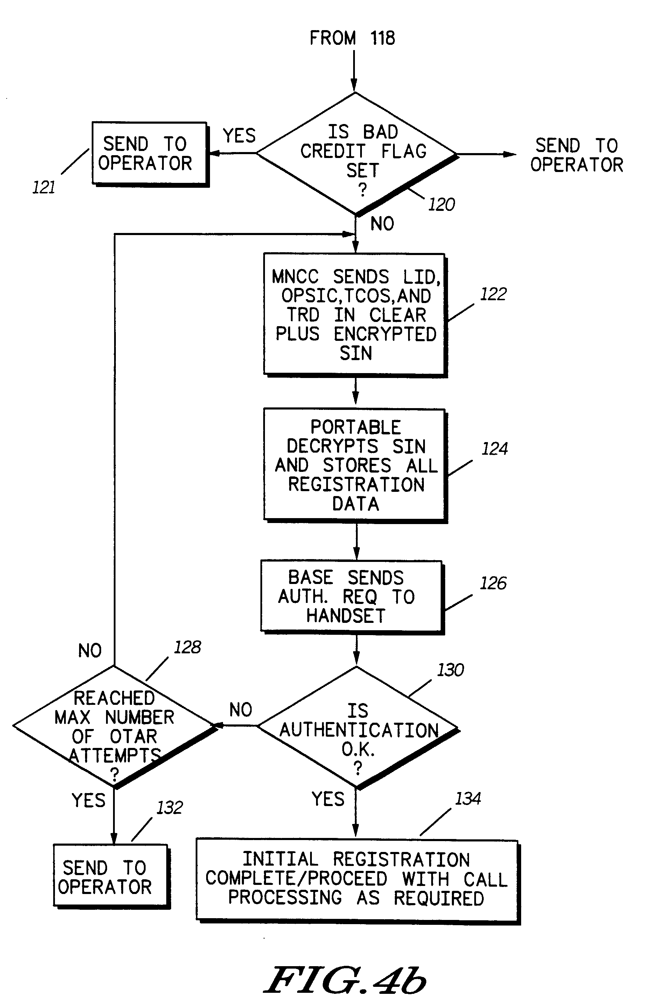

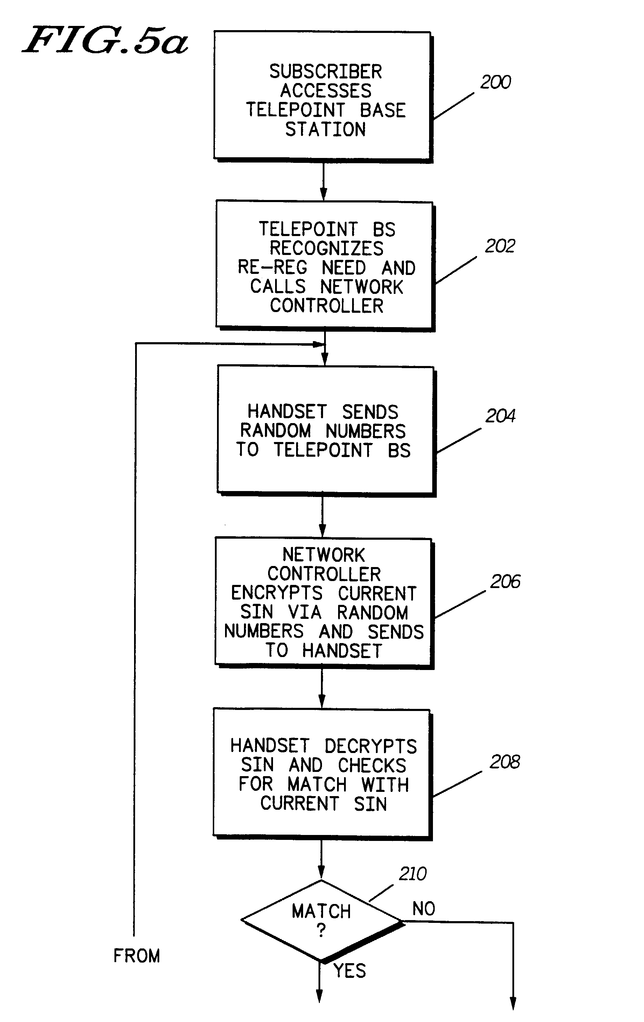

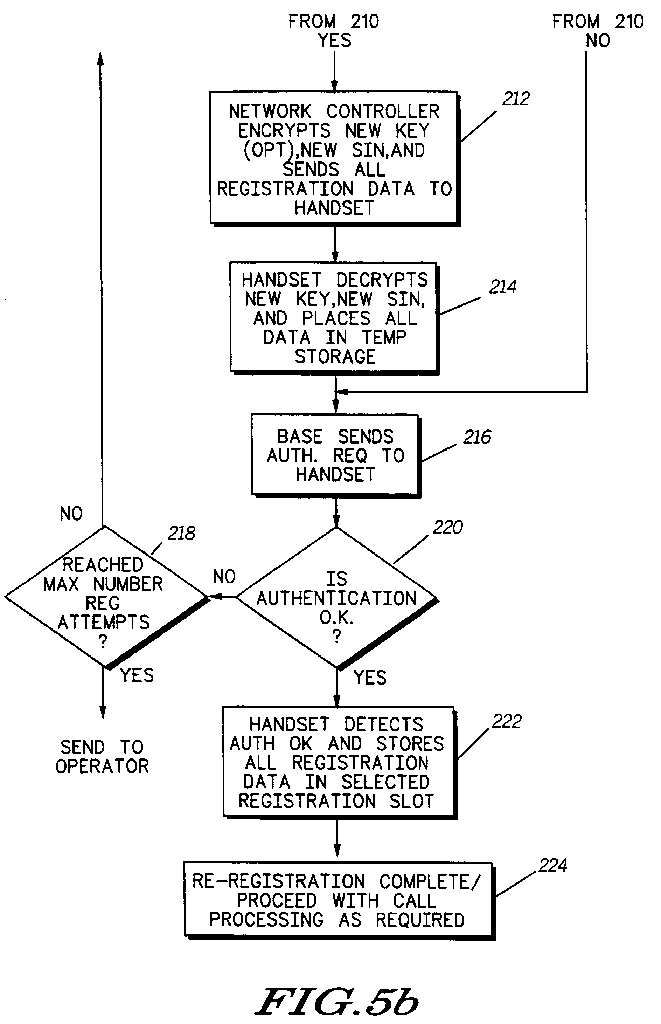

Referring to Figure 5a, there is shown a method for re-registration of a subscriber unit. In step 200 a registered subscriber accesses a telepoint base station. Then according to step 202, the telepoint base station accessed by the subscriber recognizes a re-registration need, possibly due to a compromise of the authentication or registration algorithm stored in the portable. Then the telepoint base station calls the network controller, and informs it of this fact. In step 204 the portable unit sends a set of random numbers to the telepoint base station. The base station then receives and retransmits the random numbers to the network controller which, in step 206, encrypts the current subscriber identification number with the random numbers and sends that resulting encrypted subscriber identification number to the portable unit. In step 208, the portable unit decrypts the received encrypted subscriber identification number, and checks for a match with a current subscriber identification number.

Referring to Figure 5b, if (in decision 210) a match is determined to exist (shown in Figure 5a), the portable unit will act upon subsequently received registration data. Then in step 212, the network controller encrypts a new secret key code and new subscriber identification number, and sends all registration data to the portable unit. Then in step 214, the portable unit decrypts the new secret key code, the new subscriber identification number, and places all that data in a temporary storage portion of the handset memory. Next in step 216 the base station sends an authentication request to the portable unit. The portable unit receives the authentication request, and responds thereto. The base station then makes a decision 220 on whether the authentication response is valid. If it is not valid, then a decision 218 is made on whether a maximum number of registration attempts has been reached. If the maximum number of registration attempts has been reached, the operator is notified in step 219. On the other hand, if the maximum number of registration attempts has not been reached, the process returns to step 204. In the event that the authentication response is valid, in step 222, the portable unit detects the authentication response and stores all registration data in a selected registration slot in the portable unit memory. In step 223, re-registration is completed, and call-processing proceeds, as required.

The base station and the network controller perform the basic infrastructure functions. While in the preferred embodiment infrastructure functions have beeen specifically alocated among the base station and the network controller, those functions may be interchanged between them.

## Claims

1. A method for registration of a portable unit in a communication system (10) comprising a network controller (12) having a data base for storing portable identification numbers, a base station (14) and a portable unit (16), wherein a subscriber communicates (100) to the network controller a first information set which comprises subscriber qualifying information, a portable identification number, and a key code that has been entered into the portable, and wherein the subscriber has entered (106) a link identification number for over-the-air registration into a memory within the portable unit, the method characterized by:
at the portable unit:
(a) sending (110) to the base station a request for registration, the request for registration comprising the link identification number for over-the-air registration and the portable identification number;
at the base station:
(a) receiving the request for registration from the portable unit, and sending (116) to the network controller a notice of the request for registration and the portable identification number;
at the network controller:
(a) receiving the notice of the request for registration from the base station, and determining (118) whether the portable identification number is in the network controller data base, and whether the subscriber has been approved for registration;
(b) sending (122) to the portable unit through the base station, a registration information signal when the network controller determines that the portable identification number for over-the-air registration is in the network controller data base, and that the subscriber has been approved for registration, the registration information signal comprising an encrypted subscriber identification number that has been encrypted with the key code, and an unencrypted link identification number for base station access.

2. The method for registration of the portable unit of claim 1, further characterized by:
at the portable unit:
(b) receiving the registration information signal sent by the network controller, decrypting (124) the encrypted subscriber identification number, and placing the information in the registration information signal in temporary storage; and
(c) receiving an authentication request from the base station;
(d) sending an authentication response to the base station;
(e) receiving a notification signal from the base station and maintaining the information in the registration information signal in long term storage;
at the base station:
(b) sending (126) an authentication request to the portable unit;
(c) receiving the authentication response from the portable unit, determining (130) whether the authentication response is valid, and sending a notification signal to the portable unit when the authentication response is valid.

3. The method for registration of the portable unit of claim 2, further characterized by:
at the network controller:
(a1) encrypting the subscriber identification number.

4. The method for registration of the portable unit of claim 2, further characterized by:
at the base station:
(a1) encrypting the subscriber identification number.

5. A method for re-registration of a portable unit (16) in a communication system (10) comprising a network controller (12), having a data base for storing portable identification numbers, and a base station (14), wherein a subscriber communicates (100) to the network controller a first information set which comprises subscriber qualifying information, the portable identification number, and a key code that has been entered into the portable, and wherein the subscriber has entered (106) a link identification number for over-the-air registration into a memory within the portable unit, and wherein the portable unit has been registered in the communication system, the method characterized by:
at the base station:
(a) recognizing (202) the need for re-registration of the portable unit, and transmitting a notification of the need for re-registration to the network controller;
(b) sending an authentication request to the portable unit;
(c) receiving a set of random numbers from the portable unit and sending the set of random numbers to the network controller;
at the network controller:
(a) receiving the notification of the need for re-registration;
(b) receiving the set of random numbers from the base station, encrypting (206) the current subscriber identification number with the set of random numbers; and sending (206) the encrypted subscriber identification number to the portable unit through the base station;
at the portable unit:
(a) receiving the authentication request from the base station;
(b) sending (204) a set of random numbers to the base station;
(c) receiving (208) the encrypted subscriber identification number, decrypting (208) the encrypted subscriber identification number, determining (210) whether the resulting decrypted subscriber identification number matches the current subscriber identification number, and when the resulting decrypted subscriber identification number matches the current subscriber identification number responding to any re-registration data subsequently sent by the base station.

6. The method for re-registration of the portable unit of claim 5, further characterized by:
at the portable unit:
(d) decrypting (214) the new subscriber identification number, and storing the decrypted new subscriber identification number;
at the network controller:
(c) encrypting (212) a new subscriber identification number and sending the new subscriber identification number to the portable unit, through the base station, when the decrypted subscriber identification number sent by the portable unit matches the current subscriber identification number.

7. The method for re-registration of the portable unit of claim 6, further characterized by:
at the base station:
(d) sending (216) an authentication request to the portable unit;
(e) receiving an authentication response from the portable unit, determining (220) whether the authentication signal is valid, and sending a notification signal to the portable when the authentication response is valid;
at the portable unit:
(e) receiving the authentication request, and sending an authentication response to the base station.

8. The method for re-registration of the portable unit of claim 7, further characterized by:
at the network controller:
(d) encrypting (212) a new key code and sending the new key code to the portable.

9. The method for re-registration of the portable unit of claim 8, further characterized by:
at the network controller:
encrypting (212) any new subscriber identification numbers to be sent to the portable unit when a new key code is to be sent.

## Patentansprüche

1. Verfahren zum Anmelden eines Handgerätes in einem Kommunikationssystem (10) bestehend aus einer Netzwerksteuerung (12) mit einer Datenbank zum Speichern von Handgeräteidentifikationsnummern, einer Basisstation (14) und einem Handgerät (16), bei dem ein Abonnent der Netzwerksteuerung eine erste Informationsmenge mit den Abonnenten auszeichnenden Informationen, eine Handgeräteidentifikationsnummer sowie ein in das Handgerät eingegebenes Codewort übermittelt (100) und bei dem der Abonnent eine Verbindungsidentifikationsnummer zur drahtlosen Anmeldung in einen Speicher des Handgerätes eingegeben hat (106),
gekennzeichnet durch die Verfahrensschritte:
bei dem Handgerät
(a) Senden (110) einer Anmeldeanforderung an die Basisstation, die die Verbindungsidentifikationsnummer zur drahtlosen Anmeldung und die Handgeräteidentifikationsnummer enthält;
bei der Basisstation
(b) Empfangen der Anmeldeanforderung von dem Handgerät und Senden (116) einer Mitteilung über die Anmeldeanforderung an die Netzwerksteuerung sowie Senden der Handgeräteidentifikationsnummer;
bei der Netzwerksteuerung
(a) Empfangen der Mitteilung über die Anmeldeanforderung von der Basisstation und Bestimmen, ob die Handgeräteidentifikationsnummer in der Datenbank der Netzwerksteuerung enthalten ist und ob der Abonnent zur Anmeldung zugelassen ist;
(b) Übermitteln (122) über die Basisstation dem Handgerät ein Anmeldeinformationssignal, wenn die Netzwerksteuerung feststellt, daß die Handgeräteidentifikationsnummer zur drahtlosen Anmeldung in der Datenbank der Netzwerksteuerung enthalten ist, und daß der Abonnent zur Anmeldung zugelassen ist, das Anmeldeinformationssignal bestehend aus einer mit dem Codewort verschlüsselten Abonnentenidentifikationsnummer und einer nichtverschlüsselten Verbindungsidentifikationsnummer für den Zugriff auf die Basisstation.

2. Verfahren zum Anmelden des Handgerätes nach Anspruch 1,
gekennzeichnet durch die Verfahrensschritte:
bei dem Handgerät
(b) Empfangen des von der Netzwerksteuerung ausgesendeten Anmeldeinformationssignals, Entschlüsseln (124) der verschlüsselten Abonnentenidentifikationsnummer und Eingeben der Information des Anmeldeinformationssignal in einen temporären Speicher;
(c) Empfangen einer Bestätigungsanforderung von der Basisstation;
(d) Senden einer Bestätigungsantwort an die Basisstation;
(e) Empfangen eines Mitteilungssignal von der Basisstation und Aufrechterhalten der Information des Anmeldeinformationssignals im permanenten Speicher;
bei der Basisstation
(b) Senden der Bestätigungsanforderung an das Handgerät;
(c) Empfangen der Bestätigungsantwort von dem Handgerät und Bestimmen, ob die Bestätigungsantwort gültig ist, und bei gültiger Bestätigungsantwort Senden des Mitteilungssignals an das Handgerät.

3. Verfahren zum Anmelden des Handgerätes nach Anspruch 2,
gekennzeichnet durch den Verfahrensschritt:
bei der Netzwerksteuerung (a1) Verschlüsseln der Abonnentenidentifikationsnummer.

4. Verfahren zum Anmelden des Handgerätes nach Anspruch 2,
gekennzeichnet durch den Verfahrensschritt:
bei der Basisstation (al) Verschlüsseln der Abonnentenidentifikationsnummer.

5. Verfahren zum Wiederanmelden eines Handgerätes (16) in einem Kommunikationssystem (10), daß aus einer Netzwerksteuerung (12) mit Datenbank zum Speichern von Handgeräteidentifikationsnummern und einer Basisstation (16) besteht, bei dem ein Abonnent der Netzwerksteuerung eine erste Informationsmenge mit ihn qualifizierenden Informationen, einer Handgeräteidentifikationsnummer und einem in das Handgerät eingegebenen Codewort sendet (100), und bei dem der Abonnent eine Verbindungsidentifikationsnummer zur drahtlosen Anmeldung in den Speicher des Handgerätes eingegeben hat, und bei dem das Handgerät im Kommunikationssystem registriert ist,
gekennzeichnet durch die Verfahrensschritte:
bei der Basisstation
(a) Erkennen (202) der Notwendigkeit des Wiederanmeldens des Handgerätes und Übertragen einer Notifizierung der Notwendigkeit des Wiederanmeldens an die Netzwerksteuerung;
(b) Senden einer Bestätigungsanforderung an das Handgerät;
(c) Empfangen einer Menge von Zufallszahlen von dem Handgerät und Senden dieser Menge von Zufallszahlen an die Netzwerksteuerung;
bei der Netzwerksteuerung
(a) Empfangen der Notifizierung der Notwendigkeit des Wiederanmeldens;
(b) Empfangen der Menge von Zufallszahlen von der Basisstation, Verschlüsseln (206) der Abonnentenidentifikationsnummer mit der Menge der Zufallszahlen, und Senden (206) der verschlüsselten Abonnentenidentifikationsnummer über die Basisstation an das Handgerät;
beim Handgerät
(a) Empfangen der Bestätigungsanforderung von der Basisstation;
(b) Senden einer Menge von Zufallszahlen an die Basisstation, Empfangen und Entschlüsseln (208) der verschlüsselten Abonnentenidentifikationsnummer, Feststellen (208), ob die sich ergebende entschlüsselte Abonnentenidentifikationsnummer mit der gegenwärtigen Abonnentenidentifikationsnummer übereinstimmt, und bei Übereinstimmung Antworten auf alle Wiederanmeldedaten, die im weiteren von der Basisstation gesendet werden.

6. Verfahren zum Wiederanmelden eines Handgerätes nach Anspruch 5,
gekennzeichnet durch die Verfahrensschritte:
beim Handgerät
(d) Entschlüsseln (214) der neue Abonnentenidentifikationsnummer und Speichern der neuen, verschlüsselten Abonnentenidentifikationsnummer; bei der Netzwerksteuerung
(c) Verschlüsseln (212) der neuen Abonnentenidentifikationsnummer und Senden der neuen Abonnentenidentifikationsnummer über die Basisstation an das Handgerät, wenn die vom Handgerät gesendete entschlüsselte Abonnentenidentifikationsnummer der gegenwärtigen Abonnentenidentifikationsnummer entspricht.

7. Verfahren zum Wiederanmelden eines Handgerätes nach Anspruch 6,
gekennzeichnet durch die Verfahrensschritte:
bei der Basisstation
(d) Senden (216) einer Bestätigungsanforderung an das Handgerät;
(e) Empfangen einer Bestätigungsantwort vom Handgerät, Überprüfen (220) der Gültigkeit des Bestätigungsantwort, und bei gültiger Bestätigungsantwort Senden eines Notifizierungsssignales an das Handgerät;
beim Handgerät
(e) Empfangen der Bestätigungsanforderung und Senden der Bestätigungsantwort an die Basisstation.

8. Verfahren zum Wiederanmelden eines Handgerätes nach Anspruch 7,
gekennzeichnet durch die Verfahrensschritte:
in der Netzwerksteuerung (d) Verschlüsseln (212) eines neues Codewortes und Senden des neues Codewortes an das Handgerät.

9. Verfahren zum Wiederanmelden eines Handgerätes nach Anspruch 8,
gekennzeichnet durch den Verfahrensschritt:
Verschlüsseln (212) jeder neuen Abonnentenidentifikationsnummer, die an das Handgerät gesendet werden soll, wenn von der Netzwerksteuerung ein neues Codewort gesendet werden soll.

## Revendications

1. Procédé d'enregistrement d'une unité portable dans un système de communication (10) comprenant une unité de commande de réseau (12) possédant une base de données pour le stockage de numéros d'identification de portable, un poste de base (14) et une unité portable (16), un souscripteur communiquant (100) à l'unité de commande de réseau un premier ensemble d'information comprenant une information de qualification de souscripteur, un numéro d'identification de portable et un code de verrouillage entré dans le portable et le souscripteur ayant entré (106) un numéro d'identification de liaison pour un enregistrement sur liaison aérienne dans une mémoire de l'unité portable, caractérisé par :
- sur l'unité portable :
a) l'envoi (110) vers le poste de base d'une demande d'enregistrement, la demande d'enregistrement comprenant le numéro d'identification de liaison pour l'enregistrement sur liaison aérienne et le numéro d'identification de portable;
- sur le poste de base :
a) la réception de la demande d'enregistrement à partir de l'unité portable et l'envoi (116) vers l'unité de commande de réseau d'une notification de demande d'enregistrement et du numéro d'identification de portable;
- sur l'unité de commande de réseau :
a) la réception de la notification de demande d'enregistrement à partir du poste de base et la détermination (118) du fait que le numéro d'identification de portable est dans la base de données de l'unité de commande de réseau ou non et du fait que l'enregistrement du souscripteur a été approuvé ou non;
b) l'envoi (122) à l'unité portable, via le poste de base, d'un signal d'information d'enregistrement lorsque l'unité de commande de réseau détermine que le numéro d'identification de portable pour l'enregistrement sur liaison aérienne est dans la base de données de l'unité de commande de réseau et que l'enregistrement du souscripteur a été approuvé, le signal d'information d'enregistrement comprenant un numéro codé d'identification de souscripteur qui a été codé à l'aide du code de verrouillage, et un numéro non codé d'identification de liaison pour l'accès à ce poste de base.

2. Procédé pour l'enregistrement de l'unité portable selon la revendication 1, caractérisé, de plus, par :
- sur l'unité portable :
b) la réception du signal d'information d'enregistrement envoyé par l'unité de commande de réseau, le décodage (124) du numéro codé d'identification de souscripteur et le placement de l'information du signal d'information d'enregistrement dans un stockage temporaire;
c) la réception d'une demande d'authentification du poste de base;
d) l'envoi d'une réponse d'authentification vers le poste de base; et
e) la réception d'un signal de notification du poste de base et la conservation de l'information du signal d'information d'enregistrement dans un stockage permanent;
- sur le poste de base :
b) l'envoi (126) d'une demande d'authentification à l'unité portable;
c) la réception d'une réponse d'authentification de l'unité portable, la détermination (130) du fait que la réponse d'authentification est valide ou non, et l'envoi d'un signal de notification à l'unité portable lorsque la réponse d'authentification est valide.

3. Procédé pour l'enregistrement de l'unité portable selon la revendication 2, caractérisé, de plus, par, sur l'unité de commande de réseau :
a1) le codage du numéro d'identification de souscripteur.

4. Procédé pour l'enregistrement de l'unité portable selon la revendication 2, caractérisé, de plus, par, sur le poste de base :
a1) le codage du numéro d'identification de souscripteur.

5. Procédé de réenregistrement d'une unité portable (16) dans un système de communication (10) comprenant une unité de commande de réseau (12) possédant une base de données pour le stockage de numéros d'identification de portable, et un poste de base (14), un souscripteur communiquant (100) à l'unité de commande de réseau un premier ensemble d'information comprenant une information de qualification de souscripteur, le numéro d'identification de portable et un code de verrouillage entré dans le portable et le souscripteur ayant entré (106) un numéro d'identification de liaison pour un enregistrement sur liaison aérienne dans une mémoire de l'unité portable et l'unité portable ayant été enregistrée dans le système de communication, caractérisé par :
- sur le poste de base :
a) la reconnaissance (202) du besoin de réenregistrement de l'unité portable et la transmission d'une notification du besoin de réenregistrement à l'unité de commande de réseau;
b) l'envoi d'une demande d'authentification à l'unité portable;
c) la réception d'un ensemble de nombres aléatoires de l'unité portable et l'envoi de l'ensemble de nombres aléatoires vers l'unité de commande de réseau;
- sur l'unité de commande de réseau :
a) la réception de la notification du besoin de réenregistrement;
b) la réception de l'ensemble des nombres aléatoires du poste de base, le codage (206) du numéro courant d'identification de souscripteur à l'aide de l'ensemble de nombres aléatoires et l'envoi (206) du numéro codé d'identification de souscripteur vers l'unité portable via le poste de base;
- sur l'unité portable :
a) la réception de la demande d'authentification du poste de base;
b) l'envoi (204) d'un ensemble de nombres aléatoires vers le poste de base;
c) la réception (208) du numéro codé d'identification de souscripteur, le décodage (208) du numéro codé d'identification de souscripteur, la détermination (210) du fait que le numéro décodé résultant d'identification de souscripteur correspond au numéro courant d'identification de souscripteur ou non, et lorsque le numéro décodé d'identification de souscripteur résultant correspond au numéro courant d'identification de souscripteur, la réponse à une quelconque donnée de réenregistrement envoyée par la suite par le poste de base.

6. Procédé de réenregistrement de l'unité portable selon la revendication 5, caractérisé, de plus, par :
- sur l'unité portable :
d) le décodage (214) du nouveau numéro d'identification de souscripteur et le stockage du nouveau numéro décodé d'identification de souscripteur;
- sur l'unité de commande de réseau :
c) le codage (212) d'un nouveau numéro d'identification de souscripteur et l'envoi du nouveau numéro d'identification de souscripteur à l'unité portable, via le poste de base, lorsque le numéro décodé d'identification de souscripteur envoyé par l'unité portable correspond au numéro courant d'identification de souscripteur.

7. Procédé de réenregistrement de l'unité portable selon la revendication 5, caractérisé, de plus, par :
- sur le poste de base :
d) l'envoi (216) d'une demande d'authentification à l'unité portable;
e) la réception d'une réponse d'authentification de l'unité portable, la détermination (220) du fait que le signal d'authentification est valide ou non, et l'envoi d'un signal de notification au portable lorsque la réponse d'authentification est valide;
- sur l'unité portable :
e) la réception de la demande d'authentification et l'envoi d'une réponse d'authentification au poste de base.

8. Procédé de réenregistrement de l'unité portable selon la revendication 7, caractérisé, de plus, par :
- sur l'unité de commande de réseau :
d) le codage (212) d'un nouveau code de verrouillage et l'envoi du nouveau code de verrouillage à l'unité portable.

9. Procédé de réenregistrement de l'unité portable selon la revendication 8, caractérisé, de plus, par :
- sur l'unité de commande de réseau :
e) le codage (212) d'un quelconque numéro d'identification de souscripteur à envoyer à l'unité portable lorsqu'un nouveau code de verrouillage doit être envoyé.
